# EUROPEAN PATENT SPECIFICATION

(11) **EP 0 655 400 B1**
(45) Date of publication and mention of the grant of the patent: **24.01.1996**
(21) Application number: 93830468.0
(22) Date of filing: 24.11.1993
(51) Int. Cl.: B65G 47/08, B65G 47/82

(54) **Apparatus for disposing magnetic tape cassettes in an orderly manner into respective housing trays and method put into practice thereby**
Vorrichtung und Verfahren für das geordnete Einbringen von Magnetbandkassetten in entsprechende trogförmige Behälter
Dispositif et procédé pour déposer, bien ordonnées, des cassettes de bande magnétique dans des barquettes respectives

(43) Date of publication of application: 31.05.1995
(73) Proprietor: TAPEMATIC S.p.A., I-20052 Monza (Milano) (IT)
(72) Inventor: Perego, Luciano, I-20050 Mezzago (Milano) (IT)
(74) Representative: Righetti, Giuseppe

(56) References cited:
- EP-A- 0 315 807
- EP-A- 0 568 761

## Description

The present invention relates to a method and apparatus for disposing magnetic tape cassettes in an orderly manner into respective housing trays, said apparatus being of the type comprising: a feed conveyor arranged to individually send a plurality of tape cassettes in succession, consecutively aligned in a common lying plane, to a transferring station; at least one housing tray designed to receive in engagement the tape cassettes arranged in parallel side by side rows and oriented according to respective vertical planes.

It is known that in an audio and video magnetic tape cassette processing and packaging cycle, working steps are provided in which the cassettes coming in succession from a given work station moist be collected in an orderly manner in respective housing trays, by means of which trays said cassettes are easily carried to a next work station where they arc picked up again from the trays and submitted to further processes provided in the production cycle.

For example, said orderly cassette collection in trays is usually carried out immediately after the operations for assembling the different parts forming the cassettes still devoid of the magnetic tape, for making it easier to transfer them to the work station where the tape will be wound into the cassettes.

Likewise, the cassettes are collected in trays also after the magnetic tape winding steps, in order to enable them to be transferred to the stations where boxing and packaging operations are carried out.

The foregoing being stated, in is pointed out that presently all operations necessary for storing the cassettes in trays are conducted in a completely manual manner. In fact, it is provided that the cassettes coming from a given work station be laid down on a belt conveyor, at the end of which an operator picks them up from the conveyor and puts them into the trays. It is well clear that this situation involves important labour expenses, also on account of the fact that modern automatic machines presently employed in the cassette packaging operations have such a productivity that in many cases the constant use of more than an operator is required.

Therefore, this situation is unacceptable if compared with market requirements that are oriented towards a constant increase in productivity, together with a reduction in the manufacturing costs.

An apparatus according to the preamble of claim 1 and a method according to the preamble of claim 14 is disclosed in EP-A-0 315 807.

It is an object of the present invention to solve the problems of the known art by providing an improved apparatus and method of the type disclosed in EP-A-0 315 807 adapted to carry out the completely automatized introduction of the cassettes in an orderly manner into trays, at a very high operation speed capable of enabling the inventive apparatus to be combined with a plurality of machines running at a very high production rate.

The foregoing and further objects that will become more apparent in the course of the present description are substantially attained by an apparatus according to claim 1.

Still in accordance with the present invention, this apparatus puts into practice a method of disposing magnetic tape cassettes in an orderly manner into respective housing trays according to claim 14.

Further features and advantages will become more apparent from the detailed description of a preferred embodiment of an apparatus for introducing magnetic tape cassettes in an orderly manner into respective housing trays, and a method put into practice by said apparatus, in accordance with the present invention, which description is given hereinafter by way of non-limiting example with reference to the accompanying drawings, in which:
- Fig. 1 is a fragmentary perspective view showing the apparatus of the invention in an operating step in which the tape cassettes are about to be loaded onto a collection element so as to form a cassette row thereon, to be subsequently discharged into an underlying tray;
- Fig. 2 is a perspective side view, looked from the opposite side with respect to Fig. 1, of the apparatus in reference during an operating step in which the cassette row has been discharged into the tray, and a new tray is about to be picked up from a storage station.

Referring to the drawings, reference numeral 1 generally denotes an apparatus for introducing magnetic tape cassettes in an orderly manner into respective housing trays and designed to put into practice a method being part of the present invention too.

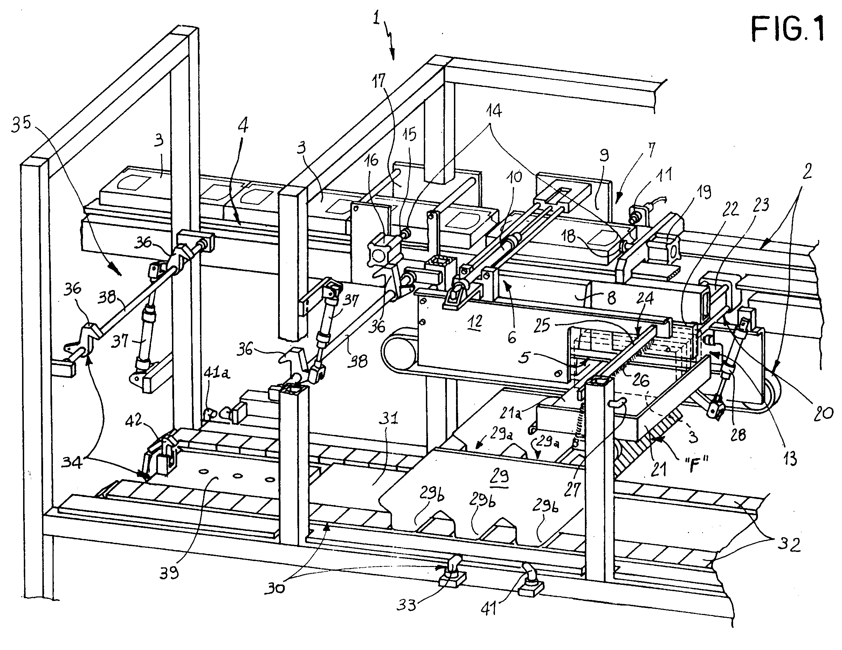

As shown in Fig. 1, the apparatus 1 comprises a feed conveyor 2, preferably a continuous belt conveyor, carrying out transportation of a plurality of tape cassettes 3 which in the example herein shown consist of VHS video cassettes disposed consecutively one after the other in mutual alignment in a common lying plane.

In the embodiment shown, the belt conveyor 2 has a primary stretch 4 advantageously disposed in alignment with and in the extentsion of a feed-out conveyor associated with one or more tape loading machines not shown as known and not of importance to the ends of the invention.

The first stretch 4 on which the cassettes 3 are disposed in a horizontal plane is followed by an end stretch 5 disposed parallel thereto and in a branched-off relationship therewith, and adapted to receive the cassettes themselves arranged according to a vertical orientation and send them to a transferring station 13 to be further described below.

An orientation means 6 acting at an intermediate station 7 interposed between the primary stretch 4 and end stretch 5 is designed to change the orientation of the individual cassettes 3 from the horizontal position to the vertical position.

Obviously, the primary stretch 4, intermediate station 7 and orientation means 6 can be eliminated, should the cassettes 3 be already oriented in a vertical direction whem coming from the feed-out conveyor associated with the cassette loading machines: in this case the cassettes can be directly sent to the end stretch 5.

The orientation means 6 advantageously comprises a guide chute 8 operatively interposed between the primary stretch 4 and end stretch 5 of the feed conveyor 2, the end stretch 5 being disposed sideways, in a plane lying at a lower position than the primary stretch 4.

Operating in alignment with the guide chute 8 is a first pusher element 9 transversely movable over the primary stretch 4 of the conveyor 2, upon the action of a first fluid-operated actuator 10 operable upon command of a first photoelectric cell 11 placed in the intermediate station 7. In greater detail, movement of the first pusher element 9 takes place between a stand-by position in which it is disposed in side by side relation with the primary stretch 4 on the opposite side from the guide chute 8 and a thrusting position in which it is located close to the chute in order to push the cassette 3 thereonto. A stop wall 12 disposed alongside the end stretch 5 on the other side from the chute 8 carries out stopping of the tilting movement imposed to the cassette 3 following falling of said cassette from the primary stretch 4 through the chute itself. Therefore the cassette 3 will fall onto the end stretch 5 being oriented in a vertical plane.

In addition it is preferably provided that a separation means 14 be arranged at the intermediate station 7 or at all events at a point of the conveyor 2 upstream of said transferring station 13, which separation means 14 is intended to act sequentially on each cassette 3 in order to separate said cassette from the cassette coming immediately after it so as to avoid any possible mechanical interference and/or rubbing between the cassettes themselves during the transverse displacement from the primary 4 or end stretch 5 of the feed conveyor 2.

In greater detail, the separation means 14 advantageously envisages the use of a clamping element 15 disposed alongside the feed conveyor 2 and selectively movable, upon command of a second fluid-operated actuator 16, between a rest position, in which it is spaced apart from the conveyor, and a work position in which it acts in thrust relation on the tape cassette 3 disposed immediately upstream of the intermediate station 7, so as to fix placement thereof along the feed conveyor 2, acting against the action of a fixed abutment 17 located at a position laterally opposite to the clamping element itself. Preferentially, cooperating with the clamping element 15 is a movable abutment 18 disposed downstream of the clamping element. Upon command of a third fluid-operated actuator 19, the movable abutment 18 lends itself to be moved in the feed direction of the cassettes 3, between a first position in which it is shifted towards the cassettes coming from the conveyor 2 in order to stop the forward movement thereof along said conveyor, and a second position in which it is spaced apart from the clamping element 15 in order to cause the cassette 3 located in the intermediate station 7 to be held in a condition in which it is separated from the cassette immediately following it which is, instead, retained by the clamping element 15.

More particularly, by virtue of the sequential actuation of the separation means 14, as well ad the orientation means 6 acting in the intermediate station 7, when one of the cassettes 3 comes in the vicinity of the movable abutment 18 disposed in the first work position, the first photoelectric cell 11 causes operation of the second fluid-operated actuator 16 which brings the clamping element 15 from the rest position to the work position. Under this situation the cassette 3 located immediately upstream of the cassette which has just reached the intermediate station 7 is stopped on the fixed abutment 17, in spite of the dragging action carried out by the feed conveyor 2.

Immediately after the intervention of the clamping element 15, the third fluid-operated actuator 19 is driven and the movable abutment 18 is brought to the second work position, so that the dragging action by the feed conveyor 2 causes the separation of the cassette 3 disposed in the intermediate station 7 from the adjacent cassette held by the clamping element 15. When separation has occurred, the intervention of the first fluid-operated actuator 10 causes the first pusher 9 to move over the first stretch 4 of the conveyor 2, so that the cassette 3 in the intermediate station 7 is caused to fall onto the guide chute 8 and, consequently, onto the end stretch 5 of the conveyor 2, taking a vertical orientation.

The cassettes reaching the transferring station 13 are cyclically concerned with the action of a transferring unit 20 designed to pick up the cassettes in succession and disposed them in side by side relation on a base wall 21a of a collection element 21 extending perpendicular to the feed conveyor 2 and angularly oscillatable about a horizontal axis, as better clarified in the following.

The transferring unit 20 preferably comprises at least one second pusher element 22 transversely movable over the end stretch 5 of the feed conveyor 2, upon command of a fourth fluid-operated actuator 23 interlocked to a second photoelectric cell 23a. More particularly, the second pusher element 22 is shiftable between a stand-by position in which it is alongside the end stretch 5 on the other side from the collection element 21 waiting for arrival of one of the tape cassettes 3 in the transferring station 13, and a thrusting position in which it is located close to the collection element 21 for laterally pushing thereon the tape cassette 3 arrived at the transferring station 13, in close proximity with the photoelectric cell 23a. The cyclic action of the second pusher 22 on the individual cassettes 3 that are sent in succession to the transferring station 13 causes a cassette row "F" to be formed along the collection element 21 on which said cassettes are disposed consecutively in side by side relation and oriented in respective vertical planes.

Suitable retaining means 24 associated with the collection element 21 acts on the cassettes 3 so as to offer a controlled friction resistance to displacement of said cassettes in order to eliminate the risk the the cassettes may fall horizontally onto the base surface. Said retaining means 24 advantageously comprises a support bar 25 extending parallelly above the collection element 21 and carrying at the lower part thereof a plurality of bristles 26 designed to elastically get into contact with the cassettes 3 on the other side from the base surface 21a in order to produce the desired friction resistance.

Also associated with the collection element 21 is drive means 27 that, when a given number of cassettes has been loaded on the collection element 21, causes the activation of a fifth fluid-operated actuator 28 causing the angular oscillation of the collection element. More particularly, said drive means essentially comprises a third photoelectric cell 27 positioned at the end of the collection element 21 opposite the second pusher element 22. When the cassette row 3 formed on the collection element 21 has been completed, the cassette 23 placed ahead in said row reaches the third photoelectric cell 27 that, on detecting the presence of said cassette, causes the intervention of the fifth fluid-operated actuator 28.

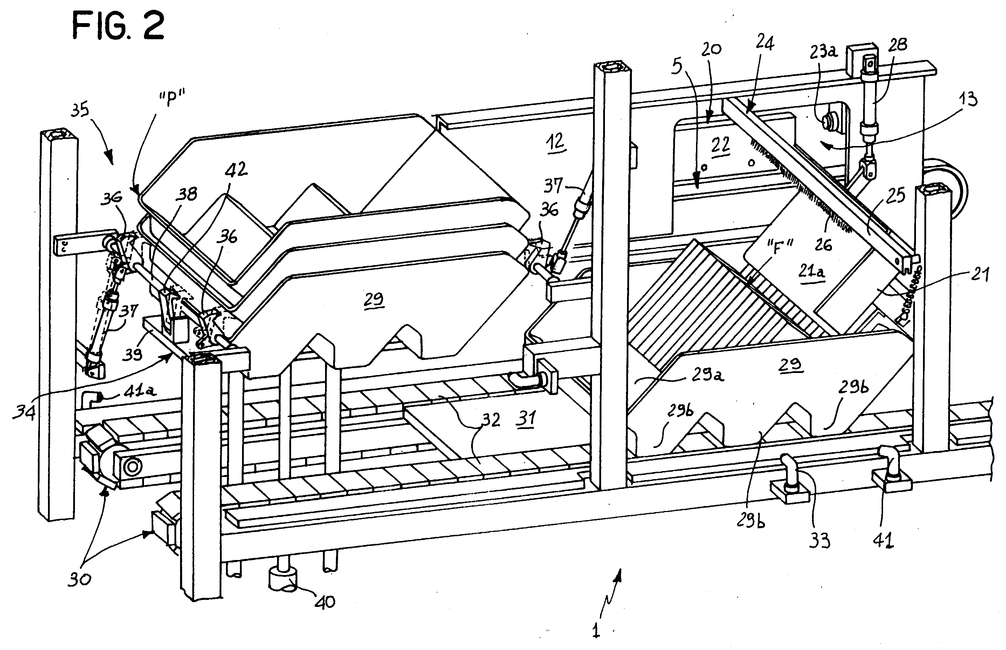

Consequently, the collection element 21 is brought from a rest position in which the base surface 21a is oriented horizontally in the extension of and in coplanar relation with the end stretch 5 of the conveyor 2, to a tilted position in which, as shown in Fig. 2, the base surface 21a is oriented obliquely.

Following the movement of the collection element 21 to the tilted position, the cassette row 3 previously formed on the collection element is dropped into a housing tray 29 previously positioned under the collection element 21.

In the embodiment shown, the apparatus 1 uses trays 29 of the type provided with a plurality of seats 29a for receiving the respective cassette rows "F" disposed parallelly in side by side relation according to an inclined orientation. The presence of said seats 29a gives the lower portion of the tray 29 a toothed profile, that is a profile exhibiting a plurality of teeth 29b distributed according to a constant pitch, as shown in the accompanying drawings. Obviously, the apparatus 1 of the invention can be adapted to the use of housing trays different from the one herein shown.

Positioning of tray 29 is carried out by supporting and moving means 30 selectively operable to displace the tray on a slide surface 31 located under the collection element 21 and according to a direction substantially perpendicular to the extension of the cassette row "F" formed on the collection element.

The supporting and moving means 30 preferably comprises a pair of tracks 32 having respective movement portions spaced apart parallelly from each other and disposed substantially flush with the slide surface 31, so that they interact under the tray 29, at laterally opposite positions, thereby causing the displacement thereof along the slide surface 31.

Said tracks 32 are driven in operation immediately after movement of the collection element 21 to the tilted position, upon command of the third photoelectric cell 27. A fourth photoelectric cell 34 substantially acting flush with the sliding surface 31 stops movement of the tray upon command of the tracks 32, taking as a reference the toothed profile exhibited by the lower part of the tray itself. In more detail, the tray movement is stopped as soon as the first one of said teeth 29b passing in front of the photoelectric cell, intercepts the light beam of said cell. Being the teeth 29b distributed according to a given constant pitch, as a result, movement of the tray 29 takes place according to a given movement pitch, corresponding to the distribution pitch of the teeth. In this way, the tray 29 is stopped when it reaches a precise positioning under the collection element 21, and in this manner, when the collection element is brought again to the tilted position, the correct engagement of the new cassette row "F" into the corresponding housing seat 29a will be ensured.

Still in accordance with the present invention, forwarding of trays 29 to the supporting and moving means 30 is carried out by a feed means 34 that, in case of need, picks up the individual trays from a loading station 35 disposed at a raised position from the slide surface 31.

More particularly, the feed means 34 in the loading station 35 consists of at least two support elements 36 that, in the operating condition, support a stack "P" formed with said trays 29, as shown in Fig. 2, by their interferring action on respective opposite rims of the tray 29 disposed at the lowermost position in the stack. In the embodiment shown two pairs of support elements 36 are provided, each acting on one of the opposite rims of the tray 29.

Upon command of respective auxiliary fluid-operated actuators, the support elements 36 lend themselves to be rotated to an angle about the axis of corresponding interconnecting shafts 38, from an operating position in which they are disposed in mutual side by side relation in order to support the tray stack "P" as above described, to a release position in which, as shown in Fig. 1, the support elements of each pair are mutually spread open for letting the tray stack "P" fall down.

The tray feeding means further comprises at least one reception platform 39 vertically movable upon command of a raising actuator 40 between a rest position in which it is disposed substantially flush with the slide surface 31, between the tracks 32, and a catching position in which it is raised from the slide surface 31 and moved close to the tray stack "P", as shown in Fig. 2, in order to stop falling of the tray stack when the support elements 36 are brought to the release position.

When the tray 29 located under the collection element 21 is such positioned that it receives the cassette row "F" in the last available housing seat 29a, the light beam issued from a fifth photoelectric cell 41 oriented obliquely to the tray feeding direction is picked up by a receiving member 41a associated with the photoelectric cell itself, to drive the feed means 34 in operation for disposing a new tray 29 on the slide surface 31.

Under this situation, the reception platform 39 is brought to the corresponding receiving position, the support elements 36 being afterwards moved from the operating position to the release position. Thus, the tray stack "P" falls onto the reception platform 39 carrying out a downward displacement sufficient to enable the lowermost tray 29 to be brought beyond the action area of the support elements 36.

The support elements 36 are then brought back to the operating position where they are ready to engage the side rims of the lower tray immediately following the tray 29 put on the reception platform 39, so as to support the tray stack "P" again.

At this point the raising actuator 40 brings the reception platform 39 again to the rest position, laying down the tray 29 on the tracks 32 associated with the supporting and moving means 30.

In order to ensure separation of the tray 29 disposed on the reception platform 39 from the overlying trays, provision is advantageously made for at least one hooking element 42 to be associated with the platform itself and elastically oscillatable about a horizontal axis, as shown in Fig. 1. This hooking element 42 is adapted to engage the side rim of the lowermost tray 29 in the stack "P" and drag it along with the reception platform 39 during the descending movement thereof.

When the last housing seat 29a is occupied with the corresponding cassette row "F", the tracks 32 will be driven in motion as far as they bring the first one of the teeth 29b of a new tray 29 to intercept the light beam of the fourth photoelectric cell 33, thereby preparing the first housing seat 29a of this new tray to receive a new cassette row "F". In the meantime, still by effect of the track movement, the tray 29 filled with the cassettes 3 will be moved away from the action area of the collection element 21, to be picked up by the apparatus 1.

The present invention attains the intended purposes.

By virtue of the apparatus in reference and the method put into practice by said apparatus for the introduction of cassettes in an orderly manner into housing trays, the manpower hitherto required according to the known art can be eliminated, while at the same time the use of modern automatic machines for processing and packaging tape cassettes is made possible.

It is also to be pointed out that the apparatus in reference as envisaged and the method put into practice by said apparatus enable the cassettes to be conveniently arranged in the trays in a quick manner, so that a single apparatus of the invention can be interlocked to a great number of cassette loading machines.

Obviously many modifications and variations may be made to the invention as conceived without departing from the scope of the inventive idea as defined in the appended claims.

## Claims

1. An apparatus (1) for disposing magnetic tape cassettes (3) in an orderly manner into respective housing trays (29), comprising:
- a feed conveyor (2) arranged to individually send a plurality of tape cassettes (3) in succession, consecutively aligned in a common lying plane, to a transferring station (13);
- at least one housing tray (29) designed to receive in engagement the tape cassettes (3) arranged in parallel side by side rows (F) and oriented according to respective vertical planes;
- a collection element (21) extending perpendicular to the feed conveyor (2);
- a transferring unit (20) arranged to pick up from the conveyor (2), in succession, the cassettes (3) arriving at the transferring station (13) in order to dispose them onto the collection element (21) in mutual side by side relation thereby forming a row (F) of cassettes oriented according to respective vertical planes;
characterized in that the collection element (21) is movable between a rest position in which it has a horizontally oriented base surface (21a) and a tilted position in which said base surface is oriented obliquely, and in that the apparatus further comprises:
- tray supporting and moving means (30) selectively operable to shift the tray (29) to a slide surface (31) under the collection element (21) and in a direction substantially perpendicular to the extension of the cassette row (F) formed on the collection element itself;
- drive means (27) for causing the displacement of the collection element (21), when a given number of cassettes (3) has been transferred thereon, from the rest position to the tilted position, so that the cassette row formed thereon will fall into the underlying tray (29).

2. An apparatus according to claim 1, characterized in that said feed conveyor (2) comprises:
- a primary stretch (4) arranged to individually feed tape cassettes (3) in succession, which cassettes are consecutively aligned in a horizontal plane;
- an end stretch (5) extending parallel to and in a branching-off relationship with the primary stretch (4) and designed to send the cassettes oriented in a vertical plane to the transferring unit (20);
- orientation means (6) operatively interposed between the primary stretch (4) and and stretch (5) for transferring the cassettes (3) to the end stretch (5) while orienting them in a vertical plane.

3. An apparatus according to claim 2, characterized in that said orientation means (6) comprises:
- a guide chute (8) extending laterally from said primary stretch (4) and leading to the end stretch (5) of the feed conveyor (2) according to a substantially vertical orientation;
- one pusher element (9) transversely movable over said primary stretch (4) in alignment with the guide chute (8), between a stand-by position in which it is disposed alongside the primary conveyor stretch (4), on the other side from the guide chute (8), and a thrusting position in which it is moved close to the guide chute (8) to push a cassette (3) coming from the primary conveyor stretch (4) onto said guide chute (8).

4. An apparatus according to claim 1, characterized in that said transferring unit (20) comprises at least one second pusher element (22) transversely moveable over the feed conveyor (2), between a stand-by position in which it is disposed alongside the conveyor on the other side from the collection element (21), waiting for the arrival of one of said tape cassettes at the transferring station (13), and a thrusting position in which it is located close to the collection element (21) in order to push laterally onto said element the tape cassette arrived at the transferring station (13).

5. An apparatus according to claim 1, characterized in that it further comprises separation means (14) operating on the feed conveyor (2) and designed to act on each cassette (3) in order to separate it from the cassette disposed consecutively thereto on the feed conveyor itself.

6. An apparatus according to claim 5, characterized in that said separation means (14) comprises a clamping element (15) disposed alongside the feed conveyor (2) and selectively movable between a rest position, in which it is moved apart from the conveyor, and a word position in which it acts in thrust relation on one of said tape cassettes (3) in order to fix the positioning thereof along the feed conveyor (2).

7. An apparatus according to claim 6, characterized in that said separation means (14) further comprises at least one movable abutment (18) disposed downstream of the clamping element (14) and movable in the cassette feed direction between one work position in which it is shifted towards the cassettes (3) coming from the conveyor (2) in order to stop the forward movement of said cassettes, and a second work position in which it is moved apart from said clamping element (14) in order to maintain one of said cassettes (3) in a condition in which it is separated from the cassette coming immediately after it and held by said clamping element (14).

8. An apparatus according to claim 4, characterized in that it further comprises retaining means (24) associated with the collection means (21) for opposing a controlled friction resistance to the displacement of the cassettes (3) thereon.

9. An apparatus according to claim 8, characterized in that said retaining means (24) comprises a support bar (25) extending parallelly above the collection element (21) and carrying at the lower part thereof a plurality of bristles (26) arranged to elastically act against the tape cassettes (3) on the opposite side with respect to said base surface (21a) so as to produce said predetermined friction resistance.

10. An apparatus according to claim 1, characterized in that it further comprises a tray loading station (35) and tray feeding means (34) designed to send the individual trays (29) in succession to said supporting and moving means (30).

11. An apparatus according to claim 10, characterized in that said tray feeding means (34) comprises:
- at least two support elements (36) disposed in the tray loading station (35) and selectively movable between an operating position in which they are disposed in mutual side by side relation for supporting one tray stack (P) by acting in contact relationship on respective opposite rims of the lowermost one of said trays (29) in said stack (P), and a release position in which they are mutually spread open to let the tray stack fall down;
- a reception platform (39) vertically movable between a receiving position in which it is disposed close to said tray stack (P) in order to stop falling of said stack when the support elements (36) are brought to the release position, and a rest position in which it is disposed substantially flush with the slide surface (31) of the trays (29) so as to deposit the lowermost tray picked up from said stack onto the supporting and moving means (30).

12. An apparatus according to claim 11, characterized in that associated with said reception platform (39) is at least one hooking element (42) arranged to engage a side rim of the lowermost tray (29) in said stack (P) when the platform is in the reception position.

13. An apparatus according to claim 11, characterized in that said supporting and moving means (30) comprises a pair of tracks (32) exhibiting respective movement portions acting parallelly flush with the slide surface (31) and extending laterally on opposite sides relative to said reception platform (39).

14. A method of disposing magnetic tape cassettes (3) in an orderly manner into respective housing trays (29), said cassettes being supplied from a feed conveyor (2) consecutively one after the other and being arranged in coplanar relation and in alignment with each other by laterally moving the individual cassettes (3) from the feed conveyor (2) and transferring them onto a base surface (21a) of a collection element (21) until a row (F) consisting of a given number of cassettes disposed consecutively in side by side relation according to respective vertical planes is formed on said base surface (21a),
characterized in that it comprises the steps of:
- positioning a housing tray (29) under the collection element (21) extending perpendicular to the feed conveyor (2);
- moving the collection element (21) from a rest position in which the base surface (21a) thereof is oriented in a substantially horizontal plane for supporting said tape cassettes (3), to a tilted position in which said base surface (21a) has an inclined orientation enabling the cassette row (F) formed thereon to fall into the underlying tray (29);
- moving the tray (29) according to a given advancement step to make it ready to receive a new cassette row (F) from the collection element (21).

15. A method according to claim 14, characterized in that it further comprises the step of orienting the cassettes (3) vertically on an end stretch (5) of the feed conveyor (2) leading to said collection element (21), said cassettes coming from a primary stretch (4) of the feed conveyor (2) oriented in a common horizontal plane.

16. A method according to claim 15, characterized in that said orienting step is put into practice by laterally pushing the cassettes (3) from the primary stretch (4) of the feed conveyor (2) in order to make them fall onto a guide chute (8) connected to the end stretch (5) of the conveyor belt intself.

17. A method according to claim 14, characterized in that each cassette (3), before being moved laterally from the feed conveyor (2), is separated from the cassette immediatelly following it.

18. A method according to claim 17, characterized in that separation of each cassette (3) from the cassette immediately following it comprises the steps of:
- fixing the positioning of the cassette (3) immediately following the cassette to be laterally moved;
- moving forward on the feed conveyor (2) the cassette (3) to be laterally shifted, in order to separate said cassette from the cassette immediately following it.

19. A method according to claim 14, characterized in that positioning of the tray (29) under the collection element (21) comprises the steps of:
- arranging a tray stack (P) in a raised position relative to a tray slide surface (31);
- picking up a tray (29) from the lower part of said stack in order to deposit it onto the slide surface (31);
- moving the tray (29) along the slide surface (31) so as to position it under the collection element (21).

20. A method according to claim 19, characterized in that picking up of the tray (29) comprises the steps of:
- supporting the tray stack (P) by support elements (36) acting on the lowermost tray (29) in the stack;
- moving a reception platform (39) under the tray stack (P);
- letting the tray stack (P) fall onto the reception platform (39);
- holding the try stack at the opposite rims of the tray (29) immediately following the tray laying on the reception platform (39);
- lowering the reception platform (39) in order to deposit the loose tray (29) onto the slide surface (31).

## Patentansprüche

1. Vorrichtung (1) zum geordneten Einbringen von Magnetbandkassetten in entsprechenden, trogförmigen Behältern (29), umfassend:
- einen Zuführförderer (2) der dazu bereitgestellt ist, nacheinander einer Übergabestation (13) einzeln eine Vielzahl von Magnetbandkassetten (3) zuzuführen, die nacheinander längs einer gemeinsamen Lageebene angereiht sind;
- mindestens einen trogförmigen Behälter (29), der dazu ausgelegt ist, die gemäß parallel aneinanderliegenden Reihen (F) geordneten und gemäß den jeweiligen vertikalen Ebenen ausgerichteten Magnetbandkassetten (3) zu ergreifen;
- ein Sammelglied (26) das sich senkrecht zum Zuführförderer (2) erstreckt;
- eine Übergabeeinheit (20), die dazu bereitgestellt ist, nacheinander dem Zuführförderer (2), die Kassetten (3) zu entnehmen, die in der Übergabestation (13) ankommen, um sie gegenseitig anliegend auf dem Sammelglied (21) anzuordnen, um eine Reihe (F) von gemäß den jeweiligen vertikalen Ebenen ausgerichteten Kassetten zu bilden;
dadurch gekennzeichnet, daß:
- das Sammelglied (21) zwischen einer Ruhestellung, in der es eine horizontal ausgerichtete Basisfläche (21a) aufweist, und einer Kippstellung beweglich ist, in der diese Basisfläche schräg ausgerichtet ist, und dadurch, daß die Vorrichtung überdies umfaßt:
- Behältertrag- und Verstellmittel (30), die wahlweise betätigbar sind, um den Behälter (29) auf eine unterhalb des Sammelgliedes (21) liegende Gleitebene (31) und gemäß einer im wesentlichen zur Abwicklung der auf dem Sammelglied selbst gebildeten Kassettenreihe (F) senkrechten Richtung zu verschieben;
- Antriebsmittel (27), um die Verstellung des Sammelgliedes (21), sobald eine vorgegebene Anzahl von Kassetten (3) demselben übergeben wurde, von der Ruhestellung in die Kippstellung zu bewirken, um in die darunterliegenden Behälter (29) die auf dem Sammelglied gebildete Kassettenreihe fallen zu lassen.

2. Vorrichtung nach Anspruch 1, dadurch gekennzeichnet, daß dieser Zuführförderer (2) umfaßt:
- einen Hauptabschnitt (4), der dazu bereitgestellt ist, in der Reihenfolge die nacheinander gemäß einer horizontalen Ebene aneinandergereihten Bandkassetten (3) einzeln zuzuführen;
- einen Endabschnitt (5) der sich parallel ausgehend vom Hauptabschnitt (4) erstreckt und dazu bestimmt ist, der Übergabeinheit (20) die Kassetten gemäß einer vertikalen Ebene ausgerichtet zuzuführen;
- Ausrichtmitteln (6), die wirksam zwischen dem Hauptabschnitt (4) und dem Endabschnitt (5) zwischengeschalten sind, um die Kassetten (3) dem Endabschnitt (5) zu übergeben, wobei sie gemäß der vertikalen Ebene ausgerichtet werden.

3. Vorrichtung nach Anspruch 2, dadurch gekennzeichnet, daß diese Ausrichtemittel (6) umfassen:
- eine Führungsrutsche (8), die sich seitlich vom Hauptabschnitt (4) erstreckt und am Endabschnitt (5) des Zuführförderers (2) gemäß einer im wesentlichen vertikalen Ausrichtung mündet;
- ein erstes Schieberglied (9), das quer oberhalb dem Hauptabschnitt (4) in Ausrichtung mit der Führungsrutsche (8) zwischen einer Warteposition, in der es dem Hauptabschnitt (4) des Förderers auf der zur Führungsrutsche (8) entgegengesetzten Richtung anliegt, und einer Verschiebeposition beweglich ist, in der es der Führungsrutsche (8) angenähert ist, um auf die Führungsrutsche (8) eine Kassette (3) zu schieben, die vom Hauptabschnitt (4) des Förderers kommt.

4. Vorrichtung nach Anspruch 1, dadurch gekennzeichnet, daß diese Übergabeeinheit (20) mindestens ein zweites Schieberglied (22) umfaßt, das quer oberhalb des Zuführförderers (2) zwischen einer Warteposition, in der es dem Förderer selbst auf der gegenüber dem Sammelglied (21) entgegengesetzten Seite anliegt, um die Ankunft einer der Bandkassetten in der Übergabestation (13) abzuwarten, und einer Verschiebeposition beweglich ist, in der sie dem Sammelglied (21) angenähert ist, um auf dasselbe die in der Übergabestation (13) angekommene Bandkassette seitlich zu verschieben.

5. Vorrichtung nach Anspruch 1, dadurch gekennzeichnet, daß sie überdies Trennmittel (14) umfaßt, die auf den Zuführförderer (2) wirken und dazu bereitgestellt sind, auf jede Kassette (3) einzuwirken, um sie von der Kassette zu trennen, die nach ihr in der Reihenfolge auf dem Zuführförderer selbst angeordnet ist.

6. Vorrichtung nach Anspruch 5, dadurch gekennzeichnet, daß diese Trennmittel (14) ein Halteelement (15) umfassen, das am Zuführförderer (2) anliegt und wahlweise zwischen einem Ruhestellung, in der es vom Förderer selbst beanstandet ist, und einer Arbeitsposition beweglich ist, in der es mit Schubwirkung auf eine der Bandkassetten (3) wirkt, um deren Positionierung längs des Zuführförderers (2) festzulegen.

7. Vorrichtung nach Anspruch 6, dadurch gekennzeichnet, daß die Trennmittel (14) überdies mindestens einen beweglichen Anschlag (18) umfassen, der nach dem Haltelement (15) liegt und längs der Vorschubrichtung der Kassetten zwischen einer Arbeitsposition, in der er in Richtung der vom Förderer (2) kommenden Kassetten (3), um deren Vorschub anzuhalten, verstellt ist, und einer zweiten Arbeitsposition verschiebbar ist, in der er vom Halteelement (14) beabstandet ist, um eine der genannten Kassetten in einer gegenüber der gleich nachfolgenden vom Halteelement (14) gehaltenen Kassette befindliche Freigabestellung zu halten.

8. Vorrichtung nach Anspruch 4, dadurch gekennzeichnet, daß sie überdies Rückhaltemittel (24) umfaßt, die dem Sammelglied (21) zugeordnet sind, um der Verstellung der Kassetten (3) auf demselben einen Reibwiderstand entgegenzusetzen.

9. Vorrichtung nach Anspruch 8, dadurch gekennzeichnet, daß die Rückhaltemittel (24) eine Tragstange (25) umfassen, die sich parallel oberhalb des Sammelgliedes (21) erstreckt und unten eine Vielzahl von Borsten (26) trägt, die dazu ausgerichtet sind, elastisch mit den Bandkassetten (3) derart auf der zur genannten Basisfläche (21a) entgegengesetzten Seite zu interferieren, um den genannten, vorgegebene Reibungswiderstand zu erzeugen.

10. Vorrichtung nach Anspruch 1, dadurch gekennzeichnet, daß sie überdies eine Behälterladestation (35) und Behälterzuführmittel (34) umfaßt, die dazu bereitgestellt sind, nacheinander die Behälter selbst einzeln den Trag- und Verstellmitteln (30) zuzuführen.

11. Vorrichtung nach Anspruch 10, dadurch gekennzeichnet, daß die Behälterzuführmittel (34) umfassen:
- mindesten zwei Stutzelemente (36), die in der Behälterladestation (35) angeordnet sind und wahlweise zwischen einer Arbeitsposition, in der sie zur Abstützung eines Behälterstapels (P) zueinander anliegen, indem sie interferierend auf die gegenüberliegenden Kanten des unterhalb des Stapels (P) angeordneten Behälter (29) wirken, und einer Freigabeposition wahlweise beweglich sind, in der sie voneinander auseinanderliegen, um den Behälterstapel fallen zu lassen;
- eine Greifplatte (39), die vertikal zwischen einer Greifposition, in der sie dem Behälterstapel (P) zum Anhalten des Falles desselben, sobald die Stützelemente (36) in die Freigabestellung gebracht wurden, angenähert ist, und einer Ruheposition beweglich ist, in der sie im wesentlichen bündig mit der Gleitebene (31) der Behälter (29) angeordnet ist, um auf den Trag- und Verstellmitteln (30) den unterhalb des genannten Stapels entnommenen Behälter abzugeben.

12. Vorrichtung nach Anspruch 11, dadurch gekennzeichnet, daß der Greifplatte (39) mindestens ein Hakenelement (42) zugeordnet ist, das dazu bereitgestellt ist, eine Seitenkante des Behälters (29) zu ergreifen, der unten im Stapel (P) angeordnet ist, sobald sich die Platte in der Greifposition befindet.

13. Vorrichtung nach Anspruch 11, dadurch gekennzeichnet, daß die Trag- und Verstellmittel (30) ein Paar von Raupen (32) umfassen, die jeweilige Verstellabschnitte aufweisen, die parallel bündig zur Gleitebene (31) wirken und sich seitlich auf gegenüber der Greifplatte (39) entgegengesetzten Seiten erstrecken.

14. Verfahren zum geordneten Einbringen von Magnetbandkassetten (3) in entsprechende trogförmige Behälter (29), wobei die Kassetten von einem Zuführförderer (2) nacheinander komplanar und gegenseitig ausgerichtet zugeführt werden, indem die einzelnen Kassetten (3) vom Zuführförderer (2) seitlich verschoben werden und sie einer Basisfläche (21a) eines Sammelgliedes (21) so lange übergeben werden, bis auf dieser Basisfläche (21a) eine Reihe (F) gebildet wird, die aus einer vorgegebenen Anzahl von nacheinander gemäß jeweiligen vertikalen Ebenen anliegenden Kassetten besteht,
dadurch gekennzeichnet, daß es folgende Arbeitsschritte umfaßt:
- Positionierung eines trogförmigen Behälters (29) unterhalb des Sammelgliedes (21), das sich senkrecht zum Zuförderer (2) erstreckt;
- Verstellung des Sammelgliedes (21) von einer Ruheposition, in der dessen Basisfläche (21a) gemäß einer im wesentlichen horiziontalen Ebene ausgerichtet ist, um diese Bandkassetten (3) abzustutzen, und einer Kipp- osition, in der die Basisfläche (21a) eine geneigte Ausrichtung aufweist, um die auf ihr gebildeten Kassettenreihe (F) in den darunterliegenden Behälter (29) fallen zu lassen;
- Verstellung des Behälters (29) gemäß eines vorgegebenen Vorschubschrittes, um ihn derart auszurichten, daß eine neue Kassettenreihe (F) vom Sammelglied (21) aufgenommen wird.

15. Verfahren nach Anspruch 14, dadurch gekennzeichnet, daß es überdies den Arbeitsschritt umfaßt, um die Kassetten (3) auf einem Endabschnitt (5) des Zuführförderers (2) vertikal auszurichten, der am Anfang des Sammelgliedes (21) liegt, wobei die Kassetten von einem Hauptabschnitt (4) des Zuführförderers (2) gemäß einer gemeinsamen horizontalen Ebene ausgerichtet herkommen.

16. Verfahren nach Anspruch 15, dadurch gekennzeichnet, daß dieser Ausrichtearbeitsschritt dadurch ausgeführt wird, indem die Kassetten (3) vom Hauptabschnitt (4) des Zuführförderers (2) seitlich verschoben werden, um sie in eine Führungsrutsche (8) fallen zu lassen, die am Anfang des Endabschnittes (5) des Förderers selbst liegt.

17. Verfahren nach Anspruch 14, dadurch gekennzeichnet, daß jede Kassette (3), bevor sie seitlich vom Zuführförderer (2) verschoben wird, von der gleich nachfolgenden Kassette getrennt wird.

18. Verfahren nach Anspruch 17, dadurch gekennzeichnet, daß die Trennung einer jeden Kassette (3) von der gleich nachfolgenden Kassette folgende Arbeitsschritte umfaßt:
- Festlegung der Positionierung der Kassette (3), die gleich der Kassette folgt, die seitlich verschoben werden muß;
- Vorschub auf den Zuführförderer (2) der Kassette (3), die seitlich verschoben werden muß, um sie von der gleich nachfolgenden Kassette zu trennen.

19. Verfahren nach Anspruch 14, dadurch gekennzeichnet, daß die Positionierung des Behälters (29) unterhalb des Sammelgliedes (21) folgende Arbeitsschritte umfaßt:
- Bereitstellung eines Behälterstapels (P) in erhöhter Stellung gegenüber einer Gleitebene (31) der Behälter;
- Entnahme eines Behälters (29) unterhalb dieses Stapels, um ihn auf der Gleitebene (31) abzulegen;
- Verschiebung des Behälters (29) längs der Gleitebene (31), um ihn unterhalb des Sammelgliedes (21) zu positionieren.

20. Verfahren nach Anspruch 19, dadurch gekennzeichnet, daß die Entnahme des Behälters (29) folgende Arbeitsschritte umfaßt:
- Abstützung des Behälterstapels (P) mittels Stützelementen (36), die auf den im Stapel unten angeordneten Behälter (29) einwirken;
- Zustellung einer Greifplatte (39) unterhalb des Behälterstapels (P);
- Fallenlassen des Behälterstapels (P) auf die Greifplatte (39);
- Zurückhalten des Behalterstapels im Bereich der gegenüberliegenden Kanten des Behälters (29) gleich nach dem auf der Greifplatte (39) angeordneten Behälter;
- Absenken der Greifplatte (39) zur Ablage des freien Behälters (29) auf der Gleitebene (31).

## Revendications

1. Dispositif (1) pour déposer, bien ordonnées, des cassettes de bande magnétique dans des barquettes (29) respectives, comprenant:
- un convoyeur d'alimentation (2) adapté a envoyer individuellement et en succession à un poste de transfert (13) une pluralité de cassettes (3) de bande magnétique alignées l'une à la suite de l'autre dans un plan de disposition commun;
- au moins une barquette (29) destinée à recevoir en engagement les cassettes (3) de bande magnétique rangées en files parallèles (F) disposées côte à côte et orientées suivant des plans verticaux respectifs;
- un élément de collecte (21) s'étendant perpendiculairement au convoyeur d'alimentation (2);
- une unité de transfert (20) destinée è enlever du convoyeur (2), en succession, les cassettes (3) atteignant le poste de transfert (13), dans le but de les disposer côte à côte sur l'élément de collecte (21) de manière a former une file (F) de cassettes orientées suivant des plans verticaux respectifs;
caractérisé en ce que:
- ledit élément de collecte (21) est mobile entre une position de repos, à laquelle il a une surface de base (21a) orientée horizontalement, et une position de basculement à laquelle ladite surface de base est orientée obliquement, et en ce que le dispositif comporte en outre:
- des moyens d'appui et de mise en mouvement (30) de la barquette susceptibles d'être actionnés sélectivement pour déplacer la barquette (2) vers une surface de glissement (31) placée au-dessous de l'élément de collecte (21) et dans une direction sensiblement perpendiculaire à l'extension de la file (F) de cassettes formée sur le même élément de collecte;
- des moyens de commande (27) pour causer le déplacement de l'élément de collecte (21), quand un nombre donné de cassettes (3) a été transféré sur ce dernier, depuis la position de repos jusqu'à la position de basculement, de sorte que la file de cassettes y formée tombera dans la barquette placée au-dessous (29).

2. Dispositif selon la revendication 1, caractérisé en ce que ledit convoyeur d'alimentation (2) comporte:
- une portion primaire (4) adaptée à alimenter individuellement des cassettes (3) de bande magnétique en succession, ces cassettes étant alignées l'une à la suite de l'autre dans un plan horizontal;
- une portion terminale (5) s'étendant parallèle à la portion primaire (4) et se ramifiant de celle-ci, cette portion terminale étant adaptée à envoyer à l'unité de transfert (20) les cassettes orientées selon un plan vertical;
- des moyens d'orientation (6) intercalés pour leur fonctionnement entre la portion primaire (4) et la portion terminale (5), en vue de transférer les cassettes (3) à la portion terminale (5) tout en les orientant dans un plan vertical.

3. Dispositif selon la revendication 2, caractérise en ce que lesdits moyens d'orientation (6) comportent:
- un couloir de guidage (8) s'étendant latéralement à partir de ladite portion primaire (4) et aboutissant à la portion terminale (5) du convoyeur d'alimentation (2) suivant une orientation sensiblement verticale;
- un premier poussoir (9) mobile transversalement au-dessus de ladite portion primaire (4) en alignement avec le couloir de guidage (8), entre une position d'attente à laquelle il est disposé le long de la portion primaire (4) du convoyeur, sur le côté opposé par rapport au couloir de guidage (8), et une position de poussée à laquelle il est mû à proximité du couloir de guidage (8) pour pousser une cassette (3) provenant de la portion primaire (4) du convoyeur sur ledit couloir de guidage (8).

4. Dispositif selon la revendication 1, caractérisé en ce que ladite unité de transfert (20) comporte au moins un deuxième poussoir (22) mobile transversalement au-dessus du convoyeur d'alimentation (2), entre une position d'attente a laquelle il est disposé le long du convoyeur, sur le côté opposé par rapport à l'élément de collecte (21), dans l'attente que l'une desdites cassettes arrive au poste de transfert (13), et une position de poussée dans laquelle il est situé à proximité de l'élément de collecte (21) pour pousser latéralement sur ce dernier la cassette de bande magnétique qui a atteint le poste de transfert (13).

5. Dispositif selon la revendication 1, caractérisé en ce qu'il comporte en outre des moyens de séparation (14) opérant sur le convoyeur d'alimentation (2) et destinés à agir sur chaque cassette (3) dans le but de la séparer de la cassette disposée consécutivement à cette cassette sur le convoyeur d'alimentation.

6. Dispositif selon la revendication 5, caractérisé en ce que lesdits moyens de séparation (14) comportent un élément de blocage (15) disposé le long du convoyeur d'alimentation (2) et mobile sélectivement entre une position de repos, à laquelle il se trouve éloigné du convoyeur, et une position de travail à laquelle il agit en relation de pousse sur une desdites cassettes (3), de manière à en fixer la mise en position le long dudit convoyeur d'alimentation (2)

7. Dispositif selon la revendication 6, caractérisé en ce que lesdits moyens de séparation (14) comportent en outre au moins une butée mobile (18) disposée en aval de l'élément de blocage (15) et mobile dans la direction d'avancement de la cassette entre une première position de travail dans laquelle ellel est mue vers la cassette (3) provenant du convoyeur (2) pour arrêter le mouvement en avant desdites cassettes, et une deuxième position de travail dans laquelle elle est éloignée dudit élément de blocage (15) en vue de maintenir l'une desdites cassettes (3) à une condition dans laquelle elle est séparée de la cassette qui vient immédiatement après, retenue par ledit élément de blocage (15).

8. Dispositif selon la revendication 4, caractérisé en ce qu'il comporte en outre des moyens de retenue (24) associés a l'élément de collecte (21) pour opposer une action contrôlée de résistance par frottement au déplacement des cassettes (3) sur ce dernier.

9. Dispositif selon la revendication 8, caractérisé en ce que lesdits moyens de retenue (24) comportent une barre support (25) s'étendant parallèlement au-dessus de l'élément de collecte (21) et portant à sa partie inférieure une pluralité de soies (26) adaptées à agir élastiquement contre les cassettes (3) de bande magnétique sur le côté opposé par rapport à ladite surface de base (21a) dans le but de produire ladite résistance par frottement prédéterminée.

10. Dispositif selon la revendication 1, caractérisé en ce qu'il comporte en outre un poste de chargement des barquettes (35) et des moyens d'alimentation (34) en barquettes destinés à envoyer les barquettes individuelles (29) en succession auxdits moyens d'appui et de mise en mouvement (30).

11. Dispositif selon la revendication 10, caractérisé en ce que lesdits moyens d'alimentation (34) en barquettes comportent:
- au moins deux éléments de support (36) disposés au poste de chargement des barquettes (35) et mobiles sélectivement entre une position de travail à laquelle ils sont disposés côte a côte pour soutenir une pile (P) de barquettes en agissant par contact sur les rebords opposés respectifs de la barquette inférieure (29) dans ladite pile (P), et une position de dégagement dans laquelle ils sont réciproquement écartés pour permettre la chute de la pile de barquettes;
- une plateforme de réception (39) mobile verticalement entre une position de réception dans laquelle elle est disposée à proximité de ladite pile (P) de barquettes, dans le but d'arrêter la chute de la pile de barquettes quand les éléments de support (36) sont amenés à la position de dégagement, et une position de repos dans laquelle elle se trouve disposée sensiblement au niveau de la surface de glissement (31) des barquettes (29) de manière à déposer la barquette inférieure enlevée de ladite pile sur les moyens d'appui et de mise en mouvement (30).

12. Dispositif selon la revendication 11, caractérise en ce qu'au moins un élément d'accrochage (42) est associé à ladite plateforme de réception (39), cet élément d'accrochage étant destiné à engager un rebord latéral de la barquette inférieure (29) dans ladite pile (P), quand la plateforme est à sa position de réception.

13. Dispositif selon la revendication 11, caractérisé en ce que lesdits moyens d'appui et de mise en mouvement (30) comportent une paire de chenilles (32) présentant des portions de mouvement respectives agissant parallèlement au niveau de la surface de glissement (31) et s'étendant latéralement sur les côtés opposés par rapport à ladite plateforme de réception (39).

14. Procédé pour disposer, bien ordonnées, des cassettes (3) de bande magnétique dans des barquettes respectives (29), lesdites cassettes étant fournies l'une après l'autre par un convoyeur d'alimentation (2) et étant disposées coplanaires et en alignement réciproque, en déplaçant latéralement les cassettes individuelles (3) à partir du convoyeur d'alimentation (2) et en les transfertant sur une surface de base (21a) d'un élément de collecte (21) jusqu'à quand il y a la formation, sur ladite surface de base (21a), d'une file (F) de cassettes se composant d'un nombre donné de cassettes disposées consécutivement côte à côte suivant des plans verticaux respectifs,
caractérisé en ce qu'il comporte les étapes de:
- mettre en position une barquette (29) au-dessous de l'élément de collecte (21) s'étendant perpendiculaire au convoyeur d'alimentation (2);
- déplacer l'élément de collecte (21) depuis une position de repos dans laquelle sa surface de base (21a) est orientée suivant un plan sensiblement horizontal en vue de supporter lesdites cassettes (3) de bande magnétique, jusqu'a une position de basculement dans laquelle ladite surface de base (21a) a une orientation inclinée permettant à la file (F) de cassettes y formée de tomber dans la barquette (29) placée au-dessous;
- déplacer la barquette (29) suivant un pas d'avancement donné pour qu'elle soit prête à recevoir de l'élément de collecte (21) une nouvelle file (F) de cassettes.

15. Procédé selon la revendication 14, caractérisé en ce qu'il comporte en outre l'étape d'orienter les cassettes (3) verticalement sur une portion terminale (5) du convoyeur d'alimentation (2) aboutissant audit élément de collecte (21), lesdites cassettes provenant d'une portion primaire (4) du convoyeur d'alimentation (2), orientées suivant un plan horizontal commun.

16. Procédé selon la revendication 15, caractérisé en ce que ladite étape d'orientation est réalisée poussant latéralement les cassettes (3) à partir de la portion primaire (4) du convoyeur d'alimentation (2) dans le but de les faire tomber sur un couloir de guidage (8) relié à la portion terminale (5) du convoyer lui-même.

17. Procédé selon la revendication 14, caractérisé en ce que chaque cassette (3), avant son déplacement latéral à partir du convoyeur d'alimentation (2), est séparée de la cassette qui la suit immédiatement.

18. Procédé selon la revendication 17, caractérisé en ce que la séparation de chaque cassette (3) de la cassette qui la suit immédiatement comporte les étapes de:
- fixer le positionnement de la cassette (3) qui suit immédiatement la cassette qui doit être déplacée latéralement;
- faire avancer sur le convoyeur d'alimentation (2) la cassette (3) qui doit être déplacée latéralement, dans le but de séparer cette cassette de la cassette qui la suit immédiatement.

19. Procédé selon la revendication 14, caractérisé en ce que la mise en place de la barquette (29) au-dessous de l'élément de collecte (21) comporte les étapes de:
- disposer une pile (P) de barquettes à une position haute par rapport à la surface de glissement (31) des barquettes;
- enlever une barquette (29) de la partie inférieure de ladite pile pour la déposer sur la surface de glissement (31);
- déplacer la barquette (29) le long de la surface de glissement (31) pour la mettre en place au-dessous de l'élément de collecte (21).

20. Procédé selon la revendication 19, caractérise en ce que l'enlèvement de la barquette (29) comporte les étapes de:
- soutenir la pile (P) de barquettes par des éléments de support (36) agissant sur la barquette inférieure (29) dans la pile;
- déplacer une plateforme de réception (39) au-dessous de la pile (P) de barquettes;
- laisser tomber la pile (P) de barquettes sur la plateforme de réception (39);
- retenir la pile de barquettes en correspondance des rebords opposés de la barquette (29) qui suit immédiatement la barquette déposée sur la plateforme de réception (39);
- faire descendre la plateforme de réception (39) pour déposer la barquette libre (29) sur la surface de glissement (31).
